(19) Europäisches Patentamt
European Patent Office
Office européen des brevets

(11) EP 1 290 053 B1

(12) **EUROPÄISCHE PATENTSCHRIFT**

(45) Veröffentlichungstag und Bekanntmachung des Hinweises auf die Patenterteilung:
**14.07.2004 Patentblatt 2004/29**

(21) Anmeldenummer: **01936391.0**

(22) Anmeldetag: **23.05.2001**

(51) Int Cl.$^7$: **C08F 297/08**

(86) Internationale Anmeldenummer:
**PCT/EP2001/005911**

(87) Internationale Veröffentlichungsnummer:
**WO 2001/090208 (29.11.2001 Gazette 2001/48)**

(54) **HOCHFLIESSFÄHIGE PROPYLENBLOCKCOPOLYMERISATE**

HIGHLY FLOWABLE PROPYLENE BLOCK COPOLYMERS

COPOLYMERES SEQUENCES DE PROPYLENE HAUTEMENT COULANTS

(84) Benannte Vertragsstaaten:
**AT BE CH CY DE DK ES FI FR GB GR IE IT LI LU MC NL PT SE TR**

(30) Priorität: **25.05.2000 DE 10025727**

(43) Veröffentlichungstag der Anmeldung:
**12.03.2003 Patentblatt 2003/11**

(73) Patentinhaber: **Basell Poliolefine Italia S.p.A.**
**20125 Milano (IT)**

(72) Erfinder:
- **DAHN, Ulrich**
**80801 München (DE)**
- **BIDELL, Wolfgang**
**68159 Mannheim (DE)**
- **ZIMMERMANN, Hans-Jürgen**
**64625 Bensheim (DE)**
- **HINGMANN, Roland**
**68526 Ladenburg (DE)**
- **RÖSCH, Joachim**
**67063 Ludwigshafen (DE)**
- **SCHWEIER, Günther**
**67159 Friedelsheim (DE)**
- **OELZE, Jürgen**
**67071 Ludwigshafen (DE)**

(74) Vertreter: **Colucci, Giuseppe et al**
**Basell Poliolefine Italia S.p.A.,**
**Intellectual Property,**
**P.le G. Donegani 12**
**44100 Ferrara (IT)**

(56) Entgegenhaltungen:
**EP-A- 0 515 879** **EP-A- 0 749 992**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 290 053 B1

Printed by Jouve, 75001 PARIS (FR)

## Beschreibung

Die vorliegende Erfindung betrifft hochfließfähige Propylenblockcopolymerisate, bestehend aus 50 bis 80 Gew.-% eines Propylenhomopolymerisats und aus 20 bis 50 Gew.-% eines Propylencopolymerisats mit 10 bis 70 Gew.-% eines einpolymerisierten von Propylen verschiedenen $C_2$-$C_8$-Alk-1-ens, erhältlich durch zweistufige Polymerisation mittels eines Ziegler-Natta-Katalysatorsystems aus der Gasphase heraus, wobei man in einer ersten Polymerisationsstufe bei einem Druck von 10 bis 50 bar, einer Temperatur von 50 bis 100°C und einer mittleren Verweilzeit des Reaktionsgemisches von 0,3 bis 5 Stunden in Anwesenheit von mindestens 2 Vol.-%, bezogen auf das Gesamtvolumen an Wasserstoff, Propylen polymerisiert und dann das in der ersten Polymerisationsstufe erhaltene Propylenhomopolymerisat mit dem Ziegler-Natta-Katalysatorsystem in einem Zwischenbehälter einträgt, dort zunächst 0,01 bis 5 Minuten lang auf weniger als 5 bar entspannt und auf einer Temperatur von 10 bis 80°C hält und anschließend durch Aufpressen eines Gasgemisches den Druck im Zwischenbehälter um 5 bis 60 bar wieder erhöht und daraufhin das Propylenhomopolymerisat mit dem Ziegler-Natta-Katalysatorsystem in eine zweite Polymerisationsstufe überführt, wobei man dort bei einem Druck von 10 bis 50 bar, einer Temperatur von 50 bis 100°C und einer mittleren Verweilzeit von 0,5 bis 5 Stunden dem Propylenhomopolymerisat ein Gemisch aus Propylen und einem $C_2$-$C_8$-Alk-1-en hinzupolymerisiert und dabei das Gewichtsverhältnis zwischen den in der ersten und den in der zweiten Polymerisationsstufe umgesetzten Monomeren so bemißt, daß es im Bereich von 4:1 bis 1:1 liegt.

Weiterhin betrifft die vorliegende Erfindung ein Verfahren zur Herstellung solcher hochfließfähigen Propylenblockcopolymerisate sowie deren Verwendung als Folien, Fasern oder Formkörper.

Durch Polymerisation an Ziegler-Natta-Katalysatoren erhältliche Propylen-Ethylen-Blockcopolymerisate sind bereits in zahlreichen Patentschriften beschrieben worden (US-A 4 454 299, US-A 4 455 405, DE-A 3 827 565, DE-A 4 004 087). Derartige Blockcopolymerisate werden üblicherweise nach einem Verfahren hergestellt, bei dem man zunächst gasförmiges Propylen in einer ersten Polymerisationsstufe polymerisiert und das daraus erhältliche Propylenhomopolymerisat anschließend in eine zweite Polymerisationsstufe bringt, wo ein Gemisch aus Propylen und Ethylen hinzupolymerisiert wird. Das Verfahren wird gewöhnlich bei erhöhtem Druck und in Anwesenheit von Wasserstoff als Molmassenregler durchgeführt. Die dabei erhältlichen Propylen-Ethylen-Blockcopolymerisate weisen meist eine gute Schlagzähigkeit und Steifigkeit auf.

Propylenblockcopolymerisate, die über einen hohen Kautschukanteil verfügen, d.h. Blockcopolymerisate, bei denen das in der zweiten Polymerisationsstufe erhaltene Copolymerisat einen hohen Anteil am gesamten Blockcopolymerisat darstellt, lassen sich bei den üblichen Polymerisationsverfahren nur für relativ niedrige Schmelzflußraten direkt aus dem Reaktor gewinnen. Dies liegt u.a. daran, daß die zum Regulieren der Molmassen der Blockcopolymerisate notwendigen hohen Wasserstoffkonzentrationen vielfach praktisch nicht realisierbar sind. Weiterhin beobachtet man bei der Herstellung von Blockcopolymerisaten mit hohem Kautschukanteil und einer relativ hohen Schmelzflußrate häufig eine unerwünschte Belagbildung in der zweiten Polymerisationsstufe, verbunden mit Problemen hinsichtlich der Morphologie der erhaltenen Produkte. Aus diesen Gründen ist es verfahrenstechnisch sehr schwierig, kautschukreiche Propylenblockcopolymerisate herzustellen, die zugleich über eine hohe Schlagzähigkeit verbunden mit einer hohen Fließfähigkeit verfügen, d.h. deren Schmelzflußraten hohe Werte aufweisen.

Eine Möglichkeit, kautschukreiche Propylenblockcopolymerisate herzustellen, die über eine hohe Fließfähigkeit verfügen, besteht darin, kautschukreiche Propylenblockcopolymerisate einem nachträglichen Molmassenabbau mit Hilfe von organischen Peroxiden zu unterwerfen, wodurch deren Schmelzflußrate und damit verbunden deren Fließfähigkeit deutlich angehoben werden kann. Allerdings erfordert ein solcher Molmassenabbau einen relativ aufwendigen zusätzlichen Verfahrensschritt. Weiterhin bringt die Verwendung von organischen Peroxiden eine Reihe von Nachteilen mit sich, u.a. erhöhte Emissionen niedermolekularer Anteile, eine Geruchsbelästigung sowie Einbußen hinsichtlich Steifigkeit, Wärmeformbeständigkeit und Erweichungsverhalten.

Der vorliegenden Erfindung lag daher die Aufgabe zugrunde, den geschilderten Nachteilen abzuhelfen und hochfließfähige Propylenblockcopolymerisate mit einem hohen Kautschukgehalt zu entwikkeln, die sich einfach und ohne den Einsatz von Peroxiden herstellen lassen und sich z.a. durch eine hohe Schlagzähigkeit und Steifigkeit sowie eine gute Wärmeformbeständigkeit und Fließfähigkeit im Spritzgußbereich auszeichnen und darüber hinaus nur geringe Anteile an leichtflüchtigen Komponenten aufweisen.

Demgemäß wurden die eingangs definierten neuen hochfließfähigen Propylenblockcopolymerisate gefunden.

Die erfindungsgemäßen Propylenblockcopolymerisate bestehen aus 50 bis 80 Gew.-%, insbesondere aus 60 bis 80 Gew.-% eines Propylenhomopolymerisats und aus 20 bis 50 Gew.-%, insbesondere aus 20 bis 40 Gew.-% eines Propylencopolymerisats mit 10 bis 70 Gew.-%, bezogen auf das Propylencopolymerisat, eines einpolymerisierten, von Propylen verschiedenen $C_2$-$C_8$-Alk-1-ens. Der Anteil des einpolymerisierten $C_2$-$C_8$-Alk-1-ens im Propylencopolymerisat beträgt insbesondere 20 bis 60 Gew.-%.

Unter der Beschreibung $C_2$-$C_8$-Alk-1-ene sollen dabei lineare und verzweigte Alk-1-ene verstanden werden, insbesondere Ethylen, But-1-en, Pent-1-en, Hex-1-en, Hept-1-en oder Oct-1-en, sowie Gemische aus diesen Comonomeren, wobei bevorzugt Ethylen oder But-1-en verwendet wird.

Die erfindungsgemäßen Propylenblockcopolymerisate sind erhältlich durch zweistufige Polymerisation aus der Gasphase heraus.

Die Polymerisation in beiden Stufen erfolgt dabei mittels eines Ziegler-Natta-Katalysatorsystems. Dabei werden insbesondere solche Katalysatorsysteme verwendet, die neben einer titanhaltigen Feststoffkomponente a) noch Cokatalysatoren in Form von organischen Aluminiumverbindungen b) und Elektronendonorverbindungen c) aufweisen. Auf diese Weise sind die erfindungsgemäßen Propylenblockcopolymerisate zugänglich.

Zur Herstellung der titanhaltigen Feststoffkomponente a) werden als Titanverbindungen im allgemeinen die Halogenide oder Alkoholate des drei- oder vierwertigen Titans verwendet, wobei auch Titanalkoxyhalogenverbindungen oder Mischungen verschiedener Titanverbindungen in Betracht kommen. Bevorzugt werden die Titanverbindungen eingesetzt, die als Halogen Chlor enthalten. Ebenfalls bevorzugt sind die Titanhalogenide, die neben Titan nur Halogen enthalten, und hierbei vor allem die Titanchloride und insbesondere Titantetrachlorid.

Die titanhaltige Feststoffkomponente a) enthält vorzugsweise mindestens eine halogenhaltige Magnesiumverbindung. Als Halogene werden hierbei Chlor, Brom, Jod oder Fluor verstanden, wobei Brom oder insbesondere Chlor bevorzugt sind. Die halogenhaltigen Magnesiumverbindungen werden entweder bei der Herstellung der titanhaltige Feststoffkomponente a) direkt eingesetzt oder bei deren Herstellung gebildet. Als Magnesiumverbindungen, die sich zur Herstellung der titanhaltige Feststoffkomponente a) eignen, kommen vor allem die Magnesiumhalogenide, wie insbesondere Magnesiumdichlorid oder Magnesiumdibromid, oder Magnesiumverbindungen, aus denen die Halogenide in üblicher Weise z.B. durch Umsetzung mit Halogenierungsmitteln erhalten werden können wie Magnesiumalkyle, Magnesiumaryle, Magnesiumalkoxy- oder Magnesiumaryloxyverbindungen oder Grignardverbindungen in Betracht. Bevorzugte Beispiele für halogenfreie Verbindungen des Magnesiums, die zur Herstellung der titanhaltige Feststoffkomponente a) geeignet sind, sind n-Butylethylmagnesium oder n-Butyloctylmagnesium. Bevorzugte Halogenierungsmittel sind Chlor oder Chlorwasserstoff. Es können jedoch auch Titanhalogenide als Halogenierungsmittel dienen.

Darüber hinaus enthält die titanhaltige Feststoffkomponente a) zweckmäßigerweise Elektronendonorverbindungen, beispielsweise mono- oder polyfunktionelle Carbonsäuren, Carbonsäureanhydride oder Carbonsäureester, ferner Ketone, Ether, Alkohole, Lactone oder phosphor- oder siliciumorganische Verbindungen.

Bevorzugt werden als Elektronendonorverbindungen innerhalb der titanhaltigen Feststoffkomponente Carbonsäurederivate und insbesondere Phthalsäurederivate der allgemeinen Formel (II)

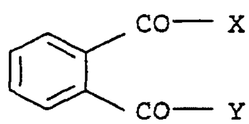

(II)

verwendet, wobei X und Y jeweils für ein Chlor- oder Bromatom oder einen $C_1$-$C_{10}$-Alkoxyrest oder gemeinsam für Sauerstoff in Anhydridfunktion stehen. Besonders bevorzugte Elektronendonorverbindungen sind Phthalsäureester, wobei X und Y einen $C_1$-$C_8$-Alkoxyrest bedeuten. Beispiele für vorzugsweise eingesetzte Phthalsäureester sind Diethylphthalat, Di-n-butylphthalat, Di-isobutylphthalat, Di-n-pentylphthalat, Di-n-hexylphthalat, Di-nheptylphthalat, Di-n-octylphthalat oder Di-2-ethylhexylphthalat.

Weiter bevorzugte Elektronendonorverbindungen innerhalb der titanhaltigen Feststoffkomponente sind Diester von 3- oder 4-gliedrigen, gegebenenfalls substituierten Cycloalkyl-1,2-dicarbonsäuren, sowie Monoester von substituierten Benzophenon-2-carbonsäuren oder substituierten Benzophenon-2-carbonsäuren. Als Hydroxyverbindungen werden bei diesen Estern die bei Veresterungsreaktionen üblichen Alkanole verwendet, beispielsweise $C_1$-$C_{15}$-Alkanole oder $C_5$-$C_7$-Cycloalkanole, die ihrerseits eine oder mehrere $C_1$-$C_{10}$-Alkylgruppen tragen können, ferner $C_6$-$C_{10}$-Phenole.

Es können auch Mischungen verschiedener Elektronendonorverbindungen verwendet werden.

Bei der Herstellung der titanhaltigen Feststoffkomponente a) werden in der Regel pro Mol der Magnesiumverbindung von 0,05 bis 2,0 mol, bevorzugt von 0,2 bis 1,0 mol, der Elektronendonorverbindungen eingesetzt.

Darüber hinaus kann die titanhaltige Feststoffkomponente a) anorganische Oxide als Träger enthalten. Es wird in der Regel ein feinteiliges anorganisches Oxid als Träger verwendet, welches einen mittleren Teilchendurchmesser von 5 bis 200 µm, bevorzugt von 20 bis 70 µm, aufweist. Unter dem mittleren Teilchendurchmesser ist hierbei der volumenbezogene Mittelwert (Medianwert) der durch Coulter-Counter-Analyse bestimmten Korngrößenverteilung zu verstehen.

Vorzugsweise sind die Körner des feinteiligen anorganischen Oxids aus Primärpartikeln zusammengesetzt,

die einen mittleren Teilchendurchmesser der Primärpartikel von 1 bis 20 µm, insbesondere von 1 bis 5 µm aufweisen. Bei den sogenannten Primärpartikeln handelt es sich um poröse, granuläre Oxidpartikel, welche im allgemeinen durch Mahlung aus einem Hydrogel des anorganischen Oxids erhalten werden. Es ist auch möglich, die Primärpartikeln vor ihrer Weiterverarbeitung zu sieben.

Weiterhin ist das bevorzugt zu verwendende anorganische Oxid auch dadurch charakterisiert, daß es Hohlräume bzw. Kanäle mit einem mittleren Durchmesser von 0,1 bis 20 µm, insbesondere von 1 bis 15 µm, aufweist, deren makroskopischer Volumenanteil am Gesamtpartikel im Bereich von 5 bis 30 %, insbesondere im Bereich von 10 bis 30 %, liegt.

Die Bestimmung der mittleren Teilchendurchmesser der Primärpartikel sowie des makroskopischen Volumenanteils der Hohlräume und Kanäle des anorganischen Oxids erfolgt zweckmäßigerweise durch Bildanalyse mit Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des anorganischen Oxids. Die erhaltenen Aufnahmen werden ausgewertet und daraus die mittleren Teilchendurchmesser der Primärpartikel sowie der makroskopische Volumenanteil der Hohlräume und Kanäle bestimmt. Die Bildanalyse erfolgt vorzugsweise durch Überführung des elektronenmikroskopischen Datenmaterials in ein Grauwert-Binärbild und die digitale Auswertung mittels einer geeigneten EDV-Programms, z.B. des Software-Pakets Analysis der Fa. SIS.

Das bevorzugt zu verwendende anorganische Oxid kann beispielsweise durch Sprühtrockenen des vermahlenen Hydrogels, welches hierzu mit Wasser oder einem aliphatischen Alkohol vermischt wird, erhalten werden. Solche feinteiligen anorganischen Oxide sind auch im Handel erhältlich.

Das feinteilige anorganische Oxid weist ferner üblicherweise ein Porenvolumen von 0,1 bis 10 $cm^3/g$, bevorzugt von 1,0 bis 4,0 $cm^3/g$, und eine spezifische Oberfläche von 10 bis 1000 $m^2/g$, bevorzugt von 100 bis 500 $m^2/g$, auf, wobei hier die durch Quecksilber-Porosimetrie nach DIN 66133 und durch Stickstoff-Adsorption nach DIN 66131 bestimmten Werte zu verstehen sind.

Es ist auch möglich ein anorganisches Oxid einzusetzen, dessen pH-Wert, d.h. der negative dekadische Logarithmus der Protonenkonzentration, im Bereich von 1 bis 6,5 und insbesondere im Bereich von 2 bis 6, liegt.

Als anorganische Oxide kommen vor allem die Oxide des Siliciums, des Aluminiums, des Titans oder eines der Metalle der I. bzw. der II. Hauptgruppe des Periodensystems in Betracht. Als besonders bevorzugtes Oxid wird neben Aluminiumoxid oder Magnesiumoxid oder einem Schichtsilikat vor allem Siliciumoxid (Kieselgel) verwendet. Es können auch Mischoxide wie Aluminiumsilikate oder Magnesiumsilikate eingesetzt werden.

Die als Träger eingesetzten anorganischen Oxide enthalten auf ihrer Oberfläche Wasser. Dieses Wasser ist zum Teil physikalisch durch Adsorption und zum Teil chemisch in Form von Hydroxylgruppen gebunden. Durch thermische oder chemische Behandlung kann der Wassergehalt des anorganischen Oxids reduziert oder ganz beseitigt werden, wobei in der Regel bei einer chemischen Behandlung übliche Trocknungsmittel wie $SiCl_4$, Chlorsilane oder Aluminiumalkyle zum Einsatz kommen. Der Wassergehalt geeigneter anorganischer Oxide beträgt von 0 bis 6 Gew.-%. Vorzugsweise wird ein anorganische Oxid in der Form, wie es im Handel erhältlich ist, ohne weitere Behandlung eingesetzt.

Die Magnesiumverbindung und das anorganische Oxid liegen innerhalb der titanhaltigen Feststoffkomponente a) bevorzugt in solchen Mengen vor, daß pro Mol des anorganischen Oxids von 0,1 bis 1,0 mol, insbesondere von 0,2 bis 0,5 mol der Verbindung des Magnesiums vorhanden sind.

Bei der Herstellung der titanhaltigen Feststoffkomponente a) kommen in der Regel ferner $C_1$- bis $C_8$-Alkanole wie Methanol, Ethanol, n-Propanol, Isopropanol, n-Butanol, sek.-Butanol, tert.-Butanol, Isobutanol, n-Hexanol, n-Heptanol, n-Oktanol oder 2-Ethylhexanol oder deren Mischungen zum Einsatz. Bevorzugt wird Ethanol verwendet.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 4 857 613 und der US-A 5 288 824 beschrieben. Bevorzugt wird das aus der DE-A 195 29 240 bekannte Verfahren angewandt.

Geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man in der Regel als weiteren Cokatalysator Elektronendonorverbindungen c) wie mono- oder polyfunktionelle Carbonsäuren, Carbonsäureanhydride oder Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können. Bevorzugte Elektronendonorverbindungen sind dabei siliciumorganische Verbindungen der allgemeinen Formel (I)

$$R^1{}_nSi(OR^2)_{4-n} \quad (I)$$

wobei $R^1$ gleich oder verschieden ist und eine $C_1$-$C_{20}$-Alkylgruppe, eine 5- bis 7-gliedrige Cycloalkylgruppe, die ihrerseits durch $C_1$-$C_{10}$-Alkyl substituiert sein kann, eine $C_6$-$C_{18}$-Arylgruppe oder eine $C_6$-$C_{18}$-Aryl-$C_1$-$C_{10}$-alkylgruppe bedeutet, $R^2$ gleich oder verschieden ist und eine $C_1$-$C_{20}$-Alkylgruppe bezeichnet und n für die ganzen Zahlen 1, 2 oder 3 steht. Besonders bevorzugt werden solche Verbindungen, in denen $R^1$ eine $C_1$-$C_8$-Alkylgruppe oder eine 5- bis 7-gliedrige Cycloalkylgruppe sowie $R^2$ eine $C_1$-$C_4$-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisopropyl-tert.-butylsilan, Dimethoxyisobutyl-sek.-butylsilan und Dimethoxyisopropyl-sek.-butylsilan hervorzuheben.

Bevorzugt werden die Cokatalysatoren b) und c) in einer solchen Menge eingesetzt, daß das Atomverhältnis zwischen Aluminium aus der Aluminiumverbindung b) und Titan aus der titanhaltigen Feststoffkomponente a) von 10:1 bis 800:1, insbesondere von 20:1 bis 200:1 beträgt und das Molverhältnis zwischen der Aluminiumverbindung b) und der Elektronendonorverbindung c) von 1:1 bis 250:1, insbesondere von 10:1 bis 80:1, beträgt.

Die titanhaltige Feststoffkomponente a), die Aluminiumverbindung b) und die in der Regel verwendete Elektronendonorverbindung c) bilden zusammen das Ziegler-Natta-Katalysatorsystem. Die Katalysatorbestandteile b) und c) können zusammen mit der titanhaltigen Feststoffkomponente a) oder als Gemisch oder auch in beliebiger Reihenfolge einzeln in denn Polymerisationsreaktor eingebracht werden.

Das Verfahren zur Herstellung der erfindungsgemäßen hochfließfähigen Propylenblockcopolymerisate wird in zwei hintereinandergeschalteten Polymerisationsstufen, d.h. in einer Reaktorkaskade in der Gasphase durchgeführt. Es können die üblichen, für die Polymerisation von $C_2$-$C_8$-Alk-1-enen verwendeten Reaktoren eingesetzt werden. Geeignete Reaktoren sind u.a. kontinuierlich betriebene Rührkessel, Schleifenreaktoren oder Wirbelbettreaktoren. Die Größe der Reaktoren ist für das erfindungsgemäße Verfahren nicht von wesentlicher Bedeutung. Sie richtet sich nach dem Ausstoß, der in der oder in den einzelnen Reaktionszonen erzielt werden soll.

Als Reaktoren werden insbesondere Wirbelbettreaktoren sowie horizontal oder vertikal gerührte Pulverbettreaktoren verwendet. Das Reaktionsbett besteht im ebenfalls erfindungsgemäßen Verfahren im allgemeinen aus dem Polymerisat aus $C_2$-$C_8$-Alk-1-enen, das im jeweiligen Reaktor polymerisiert wird.

In einer besonders bevorzugten Ausführungsform wird das zur Herstellung der erfindungsgemäßen Propylenblockcopolymerisate verwendete Verfahren in einer Kaskade aus hintereinander geschalteten Reaktoren durchgeführt, in denen das pulverförmige Reaktionsbett durch einen vertikalen Rührer in Bewegung gehalten wird, wobei sich sogenannte frei tragende Wendelrührer besonders gut eignen. Derartige Rührer sind u.a. aus der EP-B 000 512 und der EP-B 031 417 bekannt. Sie zeichnen sich insbesondere dadurch aus, daß sie das pulverförmige Reaktionsbett sehr homogen verteilen. Beispiele für solche pulverförmigen Reaktionsbette sind in der EP-B 038 478 beschrieben. Vorzugsweise besteht die Reaktorkaskade aus zwei hintereinander geschalteten, kesselförmigen, mit einem Rührer versehenen Reaktoren mit einem Rauminhalt von 0,1 bis 100 $m^3$, beispielsweise 12,5, 25, 50 oder 75 $m^3$.

Bei der Polymerisation zur Herstellung der erfindungsgemäßen Propylenblockcopolymerisate kann deren Molmasse durch in der Polymerisationstechnik übliche Regler, beispielsweise durch Wasserstoff, kontrolliert und eingestellt werden. Neben Reglern können auch sogenannte Regulatoren, d.h. Verbindungen, die die Katalysatoraktivität beeinflußen, oder auch Antistatika eingesetzt werden. Letztere verhindern die Belagbildung an der Reaktorwand durch elektrostatische Aufladung.

In der ersten Polymerisationsstufe wird zur Herstellung der erfindungsgemäßen Propylenblockcopolymerisate unter üblichen Reaktionsbedingungen Propylen bei einem Druck von 10 bis 50 bar, insbesondere von 15 bis 40 bar, einer Temperatur von 50 bis 100°C, insbesondere von 60 bis 90°C und bei einer mittleren Verweilzeit von 0,3 bis 5 Stunden, insbesondere von 0,8 bis 4 Stunden polymerisiert. Zur Regelung der Molmasse des dabei erhaltenen Propylenhomopolymerisats erfolgt die Polymerisation in der ersten Polymerisationsstufe in Anwesenheit von mindestens 2,0 Vol.-%, insbesondere in Anwesenheit von mindestens 5,0 Vol.-%, bezogen auf das in der Polymerisationsstufe vorliegende Gesamtgemisch, an Wasserstoff. Das in der ersten Polymerisationsstufe erhaltene Propylenhomopolymerisat bildet die sogenannte Matrix der erfindungsgemäßen Propylenblockcopolymerisate und weist einen Polydispersitätsindex (PI) von vorzugsweise wenigstens 2,8, insbesondere von wenigstens 3,0 auf.

Im Anschluß daran wird das in der ersten Polymerisationsstufe erhaltene Propylenhomopolymerisat mit dem verwendeten Ziegler-Natta-Katalysatorsystem aus der ersten Polymerisationsstufe entfernt und in einen Zwischenbehälter eingetragen. Als Zwischenbehälter finden die für die Polymerisation von $C_2$-$C_8$-Alk-1-enen üblicherweise verwendeten Reaktoren oder Behälter Verwendung. Geeignete Zwischenbehälter sind beispielsweise zylindrische Gefäße, Rührbehälter oder aber Zyklone.

Im Zwischenbehälter wird das aus der ersten Polymerisationsstufe ausgetragene Propylenhomopolymerisat zusammen mit dem Ziegler-Natta-Katalysatorsystem zunächst 0,01 bis 5 Minuten lang, insbesondere 0,2 bis 4 Minuten

lang auf weniger als 5 bar, vorzugsweise auf weniger als 3,5 bar entspannt. Während dieser Zeit kann man dem Propylenhomopolymerisat pro kg des Propylenhomopolymerisats auch 0,001 g bis 10 g, insbesondere 0,001 g bis 1,0 g eines $C_1$-$C_8$-Alkanols zur besseren Regelung des weiteren Polymerisationsschrittes hinzufügen. Hierfür eignet sich insbesondere Isopropanol, aber auch Ethanol oder Glykol. Der Zwischenbehälter wird zunächst bei einer Temperatur von 10 bis 80°C, insbesondere von 20 bis 70°C gehalten, anschließend wird dann durch Aufpressen eines Gasgemisches aus den verwendeten Monomeren, d.h. Propylen sowie den $C_2$-$C_8$-Alk-1-enen der Druck im Zwischenbehälter wieder um 5 bis 60 bar, insbesondere wieder um 10 bis 50 bar erhöht. Im Zwischenbehälter kann das Reaktionsgemisch auch mit üblichen Antistatika, beispielsweise Polyglykolether von Fettalkoholen, Fettsäuren und Alkylphenolen, Alkylsulfaten und Alkylphosphaten sowie quartären Ammoniumverbindungen umgesetzt werden.

Danach wird das Propylenhomopolymerisat zusammen mit dem Ziegler-Natta-Katalysatorsystem aus dem Zwischenbehälter ausgetragen und in die zweite Polymerisationsstufe eingebracht. In der zweiten Polymerisationsstufe wird dann dem Propylenhomopolymerisat bei einem Druck von 10 bis 50 bar, insbesondere von 10 bis 40 bar, einer Temperatur von 50 bis 100°C, insbesondere von 60 bis 90°C und einer mittleren Verweilzeit von 0,5 bis 5 Stunden, insbesondere von 0,8 bis 4 Stunden ein Gemisch aus Propylen und einem $C_2$-$C_8$-Alk-1-en hinzupolymerisiert. Dabei wird das Gewichtsverhältnis zwischen den in der ersten und den in der zweiten Polymerisationsstufe umgesetzten Monomeren so bemessen, daß es im Bereich von 4:1 bis 1:1, insbesondere im Bereich von 4:1 bis 1,5:1 liegt. Ebenso wie im Zwischenbehälter kann man auch in der zweiten Polymerisationsstufe wiederum pro kg Propylencopolymerisat 0,001 g bis 10 g, insbesondere 0,005 g bis 0.5 g eines $C_1$-$C_8$-Alkanols hinzufügen. Dafür empfiehlt sich insbesondere Isopropanol, Glykol oder aber Ethanol. Geeignete Comonomere des Propylens sind in der zweiten Polymerisationsstufe u.a. Ethylen und But-1-en. Der Anteil des oder der Comonomere des Propylens am gesamten Gasgemisch in der zweiten Polymerisationsstufe beträgt vorzugsweise 15 bis 60 Vol.-%, insbesondere 20 bis 50 Vol.-%.

Die auf die Weise erhaltenen erfindungsgemäßen Propylenblockcopolymerisate weisen eine Schmelzflußrate (MFR), bei 230°C und einem Gewicht von 2,16 kg, nach ISO 1133 auf, welcher der folgenden Beziehung (I) genügt:

$$\text{(I)} \qquad MFR \geq 101{,}39 + 0{,}0787 * XS^2 - 5{,}4674 * XS$$

wobei XS für den Anteil des in der zweiten Polymerisationsstufe gebildeten Propylencopolymerisats in Prozent, bezogen auf das ge-5 samte Propylenblockcopolymerisat, steht.

Die Schmelzflußrate (MFR)der erhaltenen Propylenblockcopolymerisate liegt in der Regel im Bereich von 2 bis 100 g/10min., insbesondere im Bereich von 5 bis 80 g/10min., jeweils bei 230°C und unter einem Gewicht von 2,16 kg. Die Schmelzflußrate entspricht dabei der Menge an Polymerisat, die innerhalb von 10 Minuten aus der nach ISO 1133 genormten Prüfvorrichtung bei einer Temperatur von 230°C und unter einem Gewicht von 2,16 kg ausgepreßt wird. Die erfindungsgemäßen Propylenblockcopolymerisate werden ohne peroxidischen Molmassenabbau hergestellt.

Die erfindungsgemäßen Propylenblockcopolymerisate zeichnen sich u.a. durch eine hohe Fließfähigkeit d. h. durch eine erhöhte Schmelzflußrate bei zugleich deutlich angehobenem Kautschukanteilen aus, was bedeutet, daß der Anteil des Propylencopolymerisats am gesamten Propylenblockcopolymerisat erhöht ist. Weiterhin sind die erfindungsgemäßen Propylenblockcopolymerisate durch eine hohe Schlagzähigkeit und Steifigkeit sowie durch eine gute Wärmeformbeständigkeit und Fließfähigkeit im Spritzguß (Spiralfließfähigkeit) charakterisiert. Sie enthalten überdies nur relativ wenig niedermolekulare Bestandteile, wie beispielsweise n-Heptan oder tert. Butanol.

Das ebenfalls erfindungsgemäße Verfahren kann in den üblichen Reaktoren der Kunststofftechnik auf einfache Weise durchgeführt werden, ohne daß dabei die erhaltenen Propylenblockcopolymerisate einem weiteren Molmassenabbau unterworfen werden müssen.

Die erfindungsgemäßen Propylenblockcopolymerisate eignen sich vor allem zur Herstellung von Folien, Fasern und Formkörpern.

Beispiele

Bei allen erfindungsgemäßen Beispielen 1, 2 und 3 sowie den Vergleichsbeispielen A, B und C wurde ein Ziegler-Natta-Katalysatorsystem eingesetzt, das eine nach folgendem Verfahren hergestellte titanhaltige Feststoffkomponente a) enthielt.

In einer ersten Stufe wurde ein feinteiliges Kieselgel, das einen mittleren Teilchendurchmesser von 30 µm, ein Porenvolumen von 1,5 $cm^3$/g und eine spezifische Oberfläche von 260 $m^2$/g aufwies, mit einer Lösung von n-Butyloctylmagnesium in n-Heptan versetzt, wobei pro Mol $SiO_2$ 0,3 mol der Magnesiumverbindung eingesetzt wurden. Das feinteilige Kieselgel war zusätzlich durch eine mittlere Teilchengröße der Primärpartikel von 3-5 µm und durch Hohlräume und Kanäle mit einem Durchmesser von 3-5 µm charakterisiert, wobei der makroskopische Volumenanteil der Hohlräume und Kanäle am Gesamtpartikel bei etwa 15 % lag. Die Lösung wurde 45 Minuten bei 95°C gerührt, danach auf 20°C abgekühlt, wonach die 10-fache molare Menge, bezogen auf die magnesiumorganische Verbindung,

an Chlorwasserstoff eingeleitet wurde. Nach 60 Minuten wurde das Reaktionsprodukt unter ständigem Rühren mit 3 mol Ethanol pro Mol Magnesium versetzt. Dieses Gemisch wurde 0,5 Stunden bei 80°C gerührt und anschließend mit 7,2 mol Titantetrachlorid und 0,5 mol Di-n-butylphthalat, jeweils bezogen auf 1 mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente a) enthielt
3,5 Gew.-% Ti
7,4 Gew.-% Mg
28,2 Gew.-% Cl.

Neben der titanhaltigen Feststoffkomponente a) wurden als Cokatalysatoren Triethylaluminium und Dimethoxyisobutylisopropylsilan verwendet analog der Lehre der US-A 4 857 613 und der US-A 5 288 824.

Beispiele 1, 2 und 3

Das Verfahren wurde in allen erfindungsgemäßen Beispielen 1, 2 und 3 in zwei hintereinander geschalteten Rührautoklaven, ausgestattet mit einem freitragenden Wendelrührer, mit einem Nutzvolumen von je 200 l durchgeführt. Beide Reaktoren enthielten ein bewegtes Festbett aus feinteiligem Propylenpolymerisat.

In dem ersten Polymerisationsreaktor wurde das Propylen gasförmig eingeleitet und bei einer mittleren Verweilzeit, bei einem Druck und einer Temperatur gemäß Tabelle I polymerisiert. Das dabei eingesetzte Ziegler-Natta-Katalysatorsystem bestand aus der titanhaltigen Feststoffkomponente a), sowie aus Triethylaluminium und aus Isobutylisopropyldimethoxysilan als Cokatalysator. Dabei wurde die Dosierung der beschriebenen Feststoffkomponente so bemessen, daß der Übertrag aus dem ersten in den zweiten Polymerisationsreaktor im Zeitmittel den in Tabelle I wiedergegebenen Werten entspricht. Die Dosierung dieser Komponente erfolgte mit dem zur Druckregelung zugesetzten Frischpropylen. Ebenfalls in den Reaktor zudosiert wurde: Triethylaluminium (in Form einer 1 molaren Heptanlösung) in einer Menge von 60 bis maximal 105 ml/h, und Isobutylisopropyldimethoxysilan (in Form einer 0,125 molaren Heptanlösung) in einer Menge von 70 bis maximal 120 ml/h als weitere Katalysatorbestandteile. Zur Regelung der Schmelzflußrate (nach ISO 1133) wurde Wasserstoff hinzudosiert, die Wasserstoffkonzentration im Reaktionsgas wurde gaschromatographisch kontrolliert.

Durch kurzzeitiges Entspannen des Reaktors über ein Tauchrohr wurde sukzessive Polymergries aus dem Reaktor entfernt. Das im ersten Reaktor gebildete Propylenhomopolymerisat wurde dadurch diskontinuierlich mit dem Katalysator in einen Zwischenbehälter eingetragen und dort mit Isopropanol (in Form einer 0,5 molaren Heptanlösung) umgesetzt. Die zudosierte Menge an Isopropanol wurde dabei so bemessen, daß das Gewichtsverhältnis zwischen dem im ersten Reaktor erhaltenen Propylenhomopolymerisat und dem im zweiten Reaktor hergestellten Propylencopolymerisat die in der nachfolgenden Tabelle I angegebenen Werte erreicht. Die Menge des eingesetzten Isopropanols kann auch in der Weise aufgeteilt werden, daß dieses teils in den Zwischenbehälter und teils in den zweiten Reaktor eindosiert wird. Im Zwischenbehälter wurde der Druck jeweils auf 1 bar gesenkt und dabei 30 Sekunden lang gehalten und anschließend durch Aufpressen eines Gasgemisches, das der Zusammensetzung im zweiten Reaktor entspricht, auf 30 bar angehoben.

Das Polymerisatpulver wurde danach diskontinuierlich aus dem Zwischenbehälter in den zweiten Reaktor eingetragen. Dort wurde ihm bei einem Gesamtdruck, einer Temperatur und einer mittleren Verweilzeit entsprechend Tabelle I ein Gemisch aus Propylen und Ethylen hinzupolymerisiert. Der Anteil Ethylen betrug je etwa 30 Vol.-%. Das Gewichtsverhältnis zwischen dem im ersten Reaktor gebildeten Propylenhomopolymerisat und dem im zweiten Reaktor gebildeten Propylencopolymerisat wurde mit Hilfe des zugesetzten Isopropanols kontrolliert und ist in Tabelle I angegeben.

Die genauen Bedingungen der erfindungsgemäßen Beispiele 1, 2 und 3, d.h. die Werte für Druck, Temperatur und Verweilzeit, die Menge des verwendeten Wasserstoffs, sowie die Menge der Co-katalysatoren, die Schmelzflußrate (MFR) und der Übertrag, d.h. die Menge des jeweils erhaltenen Polymerisats sind für beide Polymerisationsreaktoren jeweils in der nachfolgenden Tabelle I angegeben. Die Tabelle I enthält ferner das Gewichtsverhältnis zwischen dem im ersten Polymerisationsreaktor gebildeten Propylenhomopolymerisat [PP (I)] und dem im zweiten Polymerisationsreaktor erhaltenen Propylen-Ethylen-Copolymersiat [EPR (II)].

Der Anteil des im zweiten Reaktor gebildeten Propylen-Ethylen-Copolymerisats errechnet sich aus Übertrags- und Austragsmenge gemäß:

$$\% \text{ Copolymer} = \frac{\text{Austrag (2.Reaktor) - Übertrag (1.Reaktor)}}{\text{Austrag (2.Reaktor)}}$$

Die Eigenschaften der erhaltenen Produkte sind zusammen mit den Vergleichsbeispielen (Vergleichsbeispiele 1', 2' und 3') in den Tabellen III, IV und V zusammengestellt.

Tabelle I:

| | Beispiel 1 | Beispiel 2 | Beispiel 3 |
|---|---|---|---|
| Reaktor I | | | |
| Druck (I) [bar] | 32 | 32 | 22 |
| Temperatur (I) [°C] | 80 | 80 | 70 |
| Wasserstoff (I) [Vol.-%] | 10,9 | 9,5 | 6,3 |
| Menge Isobutylisopropyldimethoxysilan (0,125 mol) [ml/h] | 103 | 120 | 70 |
| Menge Triethylaluminium (1 mol) [ml/h] | 90 | 105 | 60 |
| Verweilzeit (I) [h] | 1,5 | 1,3 | 2,3 |
| MFR (I) [g/10min] | 190 | 180 | 115 |
| Übertrag [kg/h] | 30 | 35 | 19 |
| Reaktor II | | | |
| Druck (II) [bar] | 15 | 18 | 22 |
| Temperatur (II) [°C] | 70 | 70 | 70 |
| Wasserstoff [Vol.-%] | 1,5 | 1,2 | 0,9 |
| Ethylen [Vol.-%] | 30,6 | 29,4 | 29,4 |
| Verweilzeit [h] | 1,2 | 1,0 | 1,1 |
| Ausstoß [kg/h] | 38,6 | 46,8 | 42,9 |
| MFR (II) [g/10min] | 51 | 31 | 7,5 |
| Gew.-Verhältnis PP(I) :EPR(II) | 4:1 | 3,3:1 | 2:1 |

Vergleichsbeispiele 1', 2' und 3'

Das Verfahren wurde bei allen Vergleichsbeispielen 1', 2' und 3' in zwei hintereinander geschalteten Rührautoklaven, ausgestattet mit einem freitragenden Wendelrührer mit einem Nutzvolumen von je 200 1 durchgeführt. Beide Reaktoren enthielten ein bewegtes Festbett aus feinteiligem Propylenpolymerisat.

In den ersten Polymerisationsrekator wurde das Propylen gasförmig eingeleitet und bei einer mittleren Verweilzeit von 2,3 Stunden mit Hilfe eines Ziegler-Natta-Katalysators aus der titanhaltigen Feststoffkomponente a), Triethylaluminium und Isobutylisopropyldimethoxysilan bei einem Druck und Temperaturen gemäß Tabelle II polymerisiert. Dabei wurde die Dosierung der beschriebenen Feststoffkomponente so bemessen, daß der Übertrag aus dem ersten in den zweiten Polymerisationsreaktor im Mittel den in Tabelle II wiedergegebenen Werten entspricht. Die Dosierung dieser Komponente erfolgte mit dem zur Druckregelung zugesetzten Frischpropylen. Ebenfalls in den Reaktor zudosiert wurde Triethylaluminium (in Form einer 1 molaren Heptanlösung) in einer Menge von 60 ml/h, und 72 ml/h Isobutylisopropyldimethoxysilan (in Form einer 0,125 molaren Heptanlösung). Zur Regelung der Schmelzflußrate (nach ISO 1133) wurde Wasserstoff hinzudosiert, die Wasserstoffkonzentration im Reaktionsgas wurde gaschromatograhisch kontrolliert.

Durch kurzzeitiges Entspannen des Reaktors über ein Tauchrohr wurde sukzessive Polymergries aus dem Reaktor entfernt. Das im ersten Reaktor gebildete Propylenhomopolymerisat wurde dadurch diskontinuierlich mit dem Katalysator und zusammen mit nicht umgesetzten Monomeren in den zweiten Reaktor eingetragen, ohne dieses dabei in einem Zwischenbehälter zu entspannen.

Dort wurde ihm bei einem Gesamtdruck, einer Temperatur und einer mittleren Verweilzeit entsprechend Tabelle II ein Gemisch aus Propylen und Ethylen hinzupolymerisiert. Der Anteil Ethylen betrug je 30 Vol%. Das Gewichtsverhältnis zwischen dem im ersten Reaktor gebildeten Propylenhomopolymerisat [PP (I)] und dem in 2. Reaktor gebildeten Propylencopolymerisat [EPR (II)] ist in Tabelle II gegeben. Ebenfalls in den zweiten Reaktor zudosiert wurde Isopropanol (in Form einer 0,5 molaren Heptanlösung). Die zudosierte Menge an Isopropanol wurde so bemessen, daß das Gewichtsverhältnis zwischen PP (I) und EPR (II) gemäß Tabelle II aufrecht erhalten wurde.

Die in den Vergleichsbeispielen 1', 2' und 3' erhaltenen Propylenblockcopolymerisate wurden anschließend nach einem peroxidischen Molmassenabbau mit Hilfe einer 5 Gew.-% Lösung von Ditert.butylperoxid in n-Heptan (Luperox® 101 der Firma Interox/Peroxid-Chemie) in einem Doppelschneckenextruder (ZSK 30, Schnecke 8 A der Firma Werner & Pfleiderer) unterworfen. Auf diese Weise konnte ihre Schmelzflußrate (MFR) deutlich erhöht werden. Die Schmelzflußraten vor (MFR II) und nach dem Molmassenabbau (MFR nach Abbau) sind in der nachfolgenden Tabelle II angegeben.

Tabelle II

| | Vergleichsbeispiel 1' | Vergleichsbeispiel 2' | Vergleichsbeispiel 3' |
|---|---|---|---|
| Reaktor I | | | |
| Druck (I) [bar] | 32 | 32 | 22 |
| Temperatur (I) [°C] | 80 | 80 | 80 |
| Wasserstoff (I) [Vol%] | 0,4 | 0,9 | 0,4 |
| Menge Isobutylisopropyldimethoxysilan (0.125 mol) [ml/h] | 72 | 72 | 72 |
| Menge Triethylaluminium (1 mol) [ml/h] | 60 | 60 | 60 |
| Verweilzeit (I) [h] | 2,3 | 2,3 | 2,3 |
| MFR (I) [g/10min] | 3,5 | 16 | 15 |
| Übertrag [kg/h] | 20 | 20 | 20 |
| Reaktor II | | | |
| Durck (II) [bar] | 15 | 15 | 23 |
| Temperatur (II) [°C] | 70 | 70 | 70 |
| Vol.-% Wasserstoff [Vol.-%] | 1,6 | 3,8 | 2,1 |
| Vol.-% Ethylen [Vol.-%] | 30 | 30 | 30 |
| Verweilzeit [h] | 1,8 | 1,8 | 1,5 |
| Ausstoß [kg/h] | 25 | 26,8 | 30,2 |
| MFR (II) [g/10min] | 2 | 7,5 | 3,5 |
| MFR nach Abbau [g/10 min] | 48 | 31 | 7 |
| Gew.-Verhältnis PP(I):EPR(II) | 4:1 | 3:1 | 2:1 |

In den nachfolgenden Tabellen III, IV und V werden die Ergebnisse von Messungen an den bei den erfindungsgemäßen Beispielen 1, 2 und 3 erhaltenen Propylenblockcopolymerisaten mit den Messungen verglichen, die an den nicht erfindungsgemäßen Propylenblockcopolymerisaten der Vergleichsbeispiele 1', 2' und 3' vorgenommen werden. Folgende Eigenschaften wurden gemessen:

| Eigenschaften | Methode |
|---|---|
| XS (Xylollösliche Anteile) | ASTM D5492-98 Standard Test Method for Determination of Xylene Solubles in Propylene Plastics |
| Grenzviskosität Kautschukphase (Propylencopolymerisat) | Als sogenannte Kautschukphase wurden die vereinigten Fraktionen einer TREF-Fraktionierung verwendet, welche bei Temperaturen unterhalb 80°C in Xylol eluiert werden. Die Bestimmung der Grenzviskosität erfolgte in Decalin bei 135°C gemäß ISO 1628. |
| MFR(I); MFR(II); MFR (nach Abbau) [g/10 min.] | ISO 1133, 230°C; 2,16 kg |

(fortgesetzt)

| Eigenschaften | Methode |
|---|---|
| Crossover-Modul bzw. Polydispersitätsindex (PI) des Propylenhomopolymerisats (Matrix) | ISO 6721-10, Als Matrix wurden die vereinigten Fraktionen einer TREF-Fraktionierung definiert, welche bei Temperaturen oberhalb 90°C in Xylol eluiert werden. Gerät: RDS2 m. Platte/Platte-Geometrie ∅=25 mm, Amplitude = 0.05-1, Vorheizzeit = 5-10 min, T = 170-220°C Bestimmung des PI-Wertes: PI = 54,6 x (modulus separation) $^{-1,76}$ modulus separation = $\frac{\nu_{(G'=500Pa)}}{\nu_{(G''=500Pa)}}$ ν = Frequenz |
| Spiralfließfähigkeit | ISO 1133, Spritzdruck 100 bar T = 250°C |
| Vicat A Temperatur | ISO 306, VST A50 |
| Wärmeformbeständigkeit B | ISO 75-2 (120 x 10 x 4 mm) |
| TREF-Fraktionierung | Gemäß'L. Wild, Temperture rising elution fractionation, Adv. Polym. Sci. 98,1-47 (1990). Fraktionen wurden bei 40, 80, 90, 100, 120 und 125 C mit Xylol eluiert. |
| Flüchtige Anteile, Oligomere, Anteile an tert. Butanol und an n-Heptan | Head-space Gaschromatographie, 60 m DB-1, film 1 µm, Probengewicht: 1 g, Spülgas: He, Temperung: 1 h bei 120°C, Auswertung: Massenanteil in ppm, ext. Standard. |
| Zug-E-Modul | DIN 53457 |
| Schlagbiegeversuch (ack) bei 0°C und 23°C | ISO 179-2/1eA(F) ISO 179-2/1eU |

Tabelle III

| | Beispiel 1 | Vergleichsbeispiel 1' |
|---|---|---|
| MFR (I)/MFR (II)/MFR (nach Abbau) | 190/51/51 | 3,5/2/48 |
| XS [%] | 21 | 21,1 |
| E-Modulus [MPa] | 1126 | 1051 |
| ack (23°C) [kJ/m$^2$] | 7,8 | 7,5 |
| ack (0°C) [kJ/m$^2$] | 5,6 | 5,8 |
| Spiralfließfähigkeit [cm] | 113 | 97 |
| Wärmeformbeständigkeit B [°C] | 87 | 77 |
| Vicat A [°C] | 144 | 140 |
| P.I., Matrix | 3,19 | 2,59 |
| Crossover-Modul, Matrix [Pa] | 16.000 | 35.800 |
| Grenzviskosität Kautschuk [$\eta_{rubber}$, dl/g] | 3,73 dl/g | 1,67 dl/g |
| Anteil tert.Butanol [ppm]<br>Anteil n-Heptan [ppm] | <1ppm<br>15 ppm | 4 ppm<br>647 ppm |

Tabelle IV

| | Beispiel 2 | Vergleichsbeispiel 2' |
|---|---|---|
| MFR (I)/MFR (II)/MFR (nach Abbau) | 180/31/31 | 16/7,5/31 |
| XS [%] | 23 | 22 |
| E-Modulus [MPa] | 1037 | 1074 |
| ack (23°C) [kJ/m$^2$] | 10,2 | 7,2 |
| ack (0°C) [kJ/m$^2$] | 6,5 | 5,6 |
| Spiral flow [cm] | 101 | 92 |
| Wärmeformbeständigkeit B [°C] | 81 | 74 |
| Vicat A [°C] | 142 | 140 |
| P.I., Matrix | 3,17 | 2,52 |
| Crossover-Modul, Matrix [Pa] | 17.000 | 34.100 |
| Grenzviskosität Kautschuk [$\eta_{rubber}$, dl/g] | 3,98 dl/g | 1,68 dl/g |
| Anteil tert.Butanol [ppm]<br>Anteil n-Heptan [ppm] | <1ppm<br>9 ppm | 4 ppm<br>671 ppm |

Tabelle V

| | Beispiel 3 | Vergleichsbeispiel 3' |
|---|---|---|
| MFR (I)/MFR (II)/MFR (nach Abbau) | 115/7,5/7,5 | 15/3,5/7 |
| XS [%] | 32 | 33 |
| E-Modulus [MPa] | 745 | 613 |
| ack (23°C) [kJ/m$^2$] | 59 | 66 |
| ack (0°C) [kJ/m$^2$] | 20 | 67 |
| Spiral flow [cm] | 74 | 60 |
| Wärmeformbeständigkeit B [°C] | 67 | 62 |
| Vicat A [°C] | 41 | 37 |
| P.I., Matrix | 3,52 | 2,78 |
| Crossover-Modul, Matrix [Pa] | 35.000 | 39.000 |
| Grenzviskosität Kautschuk [$\eta_{rubber}$, dl/g] | 4,68 dl/g | 2,68 dl/g |
| Anteil tert.Butanol [ppm]<br>Anteil n-Heptan [ppm] | <1ppm<br>36 ppm | 15<br>>500 ppm |

**Patentansprüche**

**1.** Hochfließfähige Propylenblockcopolymerisate, bestehend aus 50 bis 80 Gew.-% eines Propylenhomopolymerisats und aus 20 bis 50 Gew.-% eines Propylencopolymerisats mit 10 bis 70 Gew.-% eines einpolymerisierten von Propylen verschiedenen $C_2$-$C_8$-Alk-1-ens, erhältlich durch zweistufige Polymerisation mittels eines Ziegler-Natta-Katalysatorsystems aus der Gasphase heraus, wobei man in einer ersten Polymerisationsstufe bei einem Druck von 10 bis 50 bar, einer Temperatur von 50 bis 100°C und einer mittleren Verweilzeit des Reaktionsgemisches von 0,3 bis 5 Stunden in Anwesenheit von mindestens 2,0 Vol.-%, bezogen auf das Gesamtvolumen, an Wasserstoff, Propylen polymerisiert und dann das in der ersten Polymerisationsstufe erhaltene Propylenhomopolymerisat mit dem Ziegler-Natta-Katalysatorsystem in einen Zwischenbehälter einträgt, dort zunächst 0,01 bis 5 Minuten lang auf weniger als 5 bar entspannt und auf einer Temperatur von 10 bis 80°C hält und anschließend durch

Aufpressen eines Gasgemisches den Druck im Zwischenbehälter um 5 bis 60 bar wieder erhöht und daraufhin das Propylenhomopolymerisat mit dem Ziegler-Natta-Katalysatorsystem in eine zweite Polymerisationsstufe überführt, wobei man dort bei einem Druck von 10 bis 50 bar, einer Temperatur von 50 bis 100°C und einer mittleren Verweilzeit von 0,5 bis 5 Stunden dem Propylenhomopolymerisat ein Gemisch aus Propylen und einem $C_2$-$C_8$-Alk-1-en hinzupolymerisiert und dabei das Gewichtsverhältnis zwischen den in der ersten und den in der zweiten Polymerisationsstufe umgesetzten Monomeren so bemißt, daß es im Bereich von 4:1 bis 1:1 liegt.

**2.** Hochfließfähige Propylenblockcopolymerisate nach Anspruch 1, wobei deren Schmelzflußrate (MFR), bei 230°C und einem Gewicht von 2,16 kg, gemessen nach ISO 1133, der folgenden Beziehung (I) gehorcht:

$$(I) \qquad MFR \geq 101,39 + 0,0787 * XS^2 - 5,4674 * XS$$

wobei XS für den Anteil des Propylencopolymerisats in Prozent, bezogen auf das gesamte Propylenblockcopolymerisat, steht.

**3.** Hochfließfähige Propylenblockcopolymerisate nach Anspruch 1 oder 2, wobei das eingesetzte Ziegler-Natta-Katalysatorsystem neben einer titanhaltigen Feststoffkomponente, die u.a. eine halogenhaltige Magnesiumverbindung, einen Elektronendonor und ein anorganisches Oxid als Träger enthält, noch eine Aluminiumverbindung und eine weitere Elektronendonorverbindung aufweist.

**4.** Hochfließfähige Propylenblockcopolymerisate nach den Ansprüchen 1 bis 3, wobei in der ersten Polymerisationsstufe bei einem Druck von 15 bis 40 bar und bei einer Temperatur von 60 bis 90°C Propylen polymerisiert wird.

**5.** Hochfließfähige Propylenblockcopolymerisate nach den Ansprüchen 1 bis 4, wobei pro kg des Propylenhomopolymerisats im Zwischenbehälter 0,001 bis 10 g, bezogen auf das Propylenhomopolymerisat, eines $C_1$-$C_8$-Alkanols hinzugefügt wird.

**6.** Hochfließfähige Propylenblockcopolymerisate nach den Ansprüchen 1 bis 5, wobei man im Zwischenbehälter nach der Entspannung den Druck durch Aufpressen eines Gasgemisches um 10 bis 40 bar wieder erhöht.

**7.** Hochfließfähige Propylenblockcopolymerisate nach den Ansprüchen 1 bis 6, wobei man in der zweiten Polymerisationsstufe bei einem Druck von 10 bis 40 bar und bei einer Temperatur von 60 bis 90°C ein Gemisch aus Propylen und einem $C_2$-$C_8$-Alk-1-en miteinander polymerisiert.

**8.** Verfahren zur Herstellung von hochfließfähigen Propylenblockcopolymerisaten gemäß den Ansprüchen 1 bis 7, durch zweistufige Polymerisation mittels eines Ziegler-Natta-Katalysatorsystems aus der Gasphase heraus, **dadurch gekennzeichnet, daß** man in einer ersten Polymerisationsstufe bei einem Druck von 10 bis 50 bar, einer Temperatur von 50 bis 100°C und einer mittleren Verweilzeit des Reaktionsgemisches von 0,3 bis 5 Stunden in Anwesenheit von mindestens 2 Vol.-%, bezogen auf das Gesamtvolumen an Wasserstoff, Propylen polymerisiert und danach das in der ersten Polymerisationsstufe erhaltene Propylenhomopolymerisat mit dem Ziegler-Natta-Katalysatorsystem in einen Zwischenbehälter einträgt, dort zunächst 0,01 bis 5 Minuten lang auf weniger als 5 bar entspannt und auf einer Temperatur von 10 bis 80°C hält und anschließend durch Aufpressen eines Gasgemisches den Druck im Zwischenbehälter um 5 bis 60 bar wieder erhöht und daraufhin das Propylenhomopolymerisat mit dem Ziegler-Natta-Katalysatorsystem in eine zweite Polymerisationsstufe überführt, wobei man dort bei einem Druck von 10 bis 50 bar, einer Temperatur von 50 bis 100°C und einer mittleren Verweilzeit von 0,5 bis 5 Stunden dem Propylenhomopolymerisat ein Gemisch aus Propylen und einem $C_2$-$C_8$-Alk-1-en hinzupolymerisiert und dabei das Gewichtsverhältnis zwischen den in der ersten und den in der zweiten Polymerisationsstufe umgesetzten Monomeren so bemißt, daß es im Bereich von 4:1 bis 1:1 liegt.

**9.** Verwendung der hochfließfähigen Propylenblockcopolymerisate gemäß den Ansprüchen 1 bis 7 zur Herstellung von Folien, Fasern oder Formkörpern.

**10.** Folien, Fasern und Formkörper, enthaltend hochfließfähige Propylenblockcopolymerisate gemäß den Ansprüchen 1 bis 7.

## Claims

1. A high-flow propylene block copolymer comprising from 50 to 80% by weight of a propylene homopolymer and from 20 to 50% by weight of a propylene copolymer containing from 10 to 70% by weight of a copolymerized $C_2$-$C_8$-alk-1-ene different from propylene, obtainable by two-stage polymerization from the gas phase using a Ziegler-Natta catalyst system, where, in a first polymerization stage, propylene is polymerized at a pressure of from 10 to 50 bar, a temperature of from 50 to 100°C and a mean residence time of the reaction mixture of from 0.3 to 5 hours in the presence of at least 2.0% by volume, based on the total volume of hydrogen, and the propylene homopolymer obtained in the first polymerization stage together with the Ziegler-Natta catalyst system is then introduced into an intermediate vessel, firstly depressurized there to less than 5 bar for from 0.01 to 5 minutes and held at from 10 to 80°C and the pressure in the intermediate vessel is subsequently increased again by from 5 to 60 bar by injection of a gas mixture and the propylene homopolymer together with the Ziegler-Natta catalyst system is then transferred to a second polymerization stage where a mixture of propylene and a $C_2$-$C_8$-alk-1-ene is polymerized onto the propylene homopolymer at a pressure of from 10 to 50 bar, a temperature of from 50 to 100°C and a mean residence time of from 0.5 to 5 hours, and the weight ratio of monomers reacted in the first polymerization stage and the monomers reacted in the second polymerization stage is in the range from 4:1 to 1:1.

2. A high-flow propylene block copolymer as claimed in claim 1 whose melt flow rate (MFR) at 230°C under a weight of 2.16 kg, measured in accordance with ISO 1133, obeys the following relationship (I):

$$\text{(I)} \qquad MFR \geq 101.39 + 0.0787 * XS^2 - 5.4674 * XS$$

where XS is the proportion of the propylene copolymer, in percent based on the total propylene block copolymer.

3. A high-flow propylene block copolymer as claimed in claim 1 or 2, where the Ziegler-Natta catalyst system used comprises a titanium-containing solid component comprising, inter alia, a halogen-containing magnesium compound, an electron donor and an inorganic oxide as support and also an aluminum compound and a further electron donor compound.

4. A high-flow propylene block copolymer as claimed in any of claims 1 to 3, where propylene is polymerized in the first polymerization stage at a pressure of from 15 to 40 bar and a temperature of from 60 to 90°C.

5. A high-flow propylene block copolymer as claimed in any of claims 1 to 4, where from 0.001 to 10 g, based on the propylene homopolymer, of a $C_1$-$C_8$-alkanol is added per kg of propylene homopolymer in the intermediate vessel.

6. A high-flow propylene block copolymer as claimed in any of claims 1 to 5, where, after the depressurization, the pressure in the intermediate vessel is increased again by from 10 to 40 bar by injection of a gas mixture.

7. A high-flow propylene block copolymer as claimed in any of claims 1 to 6, where a mixture of propylene and a $C_2$-$C_8$-alk-1-ene are polymerized with one another in the second polymerization stage at a pressure of from 10 to 40 bar and a temperature of from 60 to 90°C.

8. A process for preparing high-flow propylene block copolymers as claimed in any of claims 1 to 7, obtainable by two-stage polymerization from the gas phase using a Ziegler-Natta catalyst system, where, in a first polymerization stage, propylene is polymerized at a pressure of from 10 to 50 bar, a temperature of from 50 to 100°C and a mean residence time of the reaction mixture of from 0.3 to 5 hours in the presence of at least 2.0% by volume, based on the total volume, of hydrogen and the propylene homopolymer obtained in the first polymerization stage together with the Ziegler-Natta catalyst system is then introduced into an intermediate vessel, firstly depressurized there to less than 5 bar for from 0.01 to 5 minutes and held at from 10 to 80°C and the pressure in the intermediate vessel is subsequently increased again by from 5 to 60 bar by injection of a gas mixture and the propylene homopolymer together with the Ziegler-Natta catalyst system is then transferred to a second polymerization stage where a mixture of propylene and a $C_2$-$C_8$-alk-1-ene is polymerized onto the propylene homopolymer at a pressure of from 10 to 50 bar, a temperature of from 50 to 100°C and a mean residence time of from 0.5 to 5 hours, and the weight ratio of monomers reacted in the first polymerization stage to the monomers reacted in the second polymerization stage is in the range from 4:1 to 1:1.

9. The use of a high-flow propylene block copolymer as claimed in any of claims 1 to 7 for producing films, fibers or

moldings.

**10.** A film, fiber or molding comprising a high-flow propylene block copolymer as claimed in any of claims 1 to 7.

## Revendications

**1.** Copolymèrisat séquencé de propylène présentant un caractère de fluidité élevé, formé de 50 à 80 % en poids d'homopolymérisat de propylène et de 20 à 50 % en poids d'un copolymèrisat de propylène avec 10 à 70 % en poids d'un copolymèrisat de propylène et de divers alk-1-ènes en $C_2$-$C_8$, susceptible d'être obtenu par une polymérisation en deux étapes à l'aide d'un système de catalyseur Ziegler-Natta, en phase gazeuse, dans lequel, dans une première étape de polymérisation, on polymérise du propylène sous une pression de 10 à 50 bars, une température de 50 à 100°C et pendant un temps de contact moyen du mélange réactionnel de 0,3 à 5 heures en présence d'au moins 2,0 % en volume, exprimé par rapport au volume total, d'hydrogène, et ensuite, on introduit l'homopolymérisat de propylène et le système de catalyseur Ziegler-Natta obtenus dans la première étape de polymérisation dans une cuve intermédiaire, où ensuite on maintient le tout pendant 0,01 à 5 minutes sous une pression d'au moins 5 bars et une température de 10 à 80°C, et enfin par action d'un mélange gazeux, on relève la pression dans la cuve intermédiaire puis on transfère l'homopolymérisat de propylène avec le système de catalyseur Ziegler-Natta dans une deuxième étape de polymérisation où là, sous une pression de 10 à 50 bars, une température de 50 à 100°C et un temps de contact moyen de 0,5 à 5 heures, on copolymérise l'homopolymérisat de propylène et un mélange de propylène et d'un alk-1-ène en $C_2$-$C_8$ puis on ajuste les proportions entre les monomères transformés dans la première et dans la deuxième étape de polymérisation pour qu'elles soient comprises entre 4/1 et 1/1.

**2.** Copolymèrisat séquencé de propylène présentant un caractère de fluidité élevé selon la revendication 1, dans lequel l'indice de fluidité (MFR) à 230°C sous une charge de 2,16 kg, mesurée selon la norme ISO 1133, obéit à la relation (I) suivante :

$$\text{(I)} \qquad MFR \geq 101{,}39 + 0{,}0787 * XS^2 - 5{,}4674 * XS$$

dans laquelle XS représente la proportion de copolymèrisat de propylène en % exprimée par rapport à la totalité du copolymère séquencé de propylène.

**3.** Copolymèrisat séquencé de propylène présentant un caractère de fluidité élevé selon la revendication 1 ou 2, dans lequel le système de catalyseur Ziegler-Natta utilisé, outre la présence d'un dérivé solide contenant du titane, renferme, entre autres, un dérivé de magnésium halogéné, un électro-donneur et un oxyde inorganique en tant que support, et en outre un dérivé d'aluminium et un autre dérivé électrodonneur.

**4.** Copolymèrisat séquencé de propylène présentant un caractère de fluidité élevé selon l'une quelconque des revendications 1 à 3, dans lequel, dans la première étape de polymérisation, on polymérise le propylène sous une pression de 15 à 40 bars et une température de 60 à 90°C.

**5.** Copolymèrisat séquencé de propylène présentant un caractère de fluidité élevé selon l'une quelconque des revendications 1 à 4, dans lequel, par kilogramme d'homopolymérisat de propylène dans la cuve intermédiaire, on introduit de 0,01 à 10 g, exprimés par rapport à l'homopolymérisat de propylène, d'un alcanol en $C_1$ à $C_8$.

**6.** Copolymèrisat séquencé de propylène présentant un caractère de fluidité élevé selon l'une quelconque des revendications 1 à 5, dans lequel, dans la cuve intermédiaire, après mise sous pression, on porte la pression de nouveau à une valeur de 10 à 40 bars par action d'un mélange gazeux.

**7.** Copolymèrisat séquencé de propylène présentant un caractère de fluidité élevé selon l'une quelconque des revendications 1 à 6, dans lequel, dans la deuxième étape de polymérisation, on effectue une polymérisation ensemble d'un mélange de propylène et d'un alk-1-ène en $C_2$ à $C_8$ sous une pression de 10 à 40 bars et une température de 60 à 90°C.

**8.** Procédé de fabrication de copolymèrisat séquencé de propylène présentant un caractère de fluidité élevé selon l'une quelconque des revendications 1 à 7, au moyen d'une polymérisation en deux étapes à l'aide d'un système

de catalyseur Ziegler-Natta en phase gazeuse, **caractérisé en ce que**, dans une première étape de polymérisation, sous une pression de 10 à 50 bars, une température de 50 à 100°C et pendant un temps de contact moyen du mélange réactionnel de 0,3 à 5 heures, en présence d'au moins 2 % en volume d'hydrogène, exprimés par rapport au volume total, on polymérise du propylène et ensuite, on introduit l'homopolymèrisat de propylène obtenu dans la première étape de polymérisation ainsi que le système de catalyseur Ziegler-Natta dans une cuve intermédiaire, où ensuite on exerce une pression d'au moins 5 bars pendant 0,01 à 5 minutes et sous une température de 10 à 80°C, et enfin on relève la pression dans la cuve intermédiaire par action d'un mélange gazeux à une valeur de 5 à 60 bars et ensuite on soumet à une deuxième étape de polymérisation l'homopolymère de propylène et le système de catalyseur Ziegler-Natta, et on copolymérise sous une pression de 10 à 50 bars, une température de 50 à 100°C et avec un temps de contact moyen de 0,5 à 5 heures, l'homopolymérisat de propylène avec un mélange de propylène et d'un alk-1-ène en $C_2$-$C_8$, de sorte que les proportions pondérales entre les monomères introduits dans la première et dans la deuxième étape de polymérisation soient ajustées de façon qu'elle se situent dans le domaine de 4/1 à 1/1.

**9.** Utilisation de copolymèrisat séquencé de propylène présentant un caractère de fluidité élevé selon l'une quelconque des revendications 1 à 7, pour la fabrication de feuilles, de fibres et d'objets.

**10.** Feuilles, fibres et objets susceptibles d'être obtenus à partir de copolymères séquencés de propylène présentant un caractère de fluidité élevé selon l'une quelconque des revendications 1 à 7.